# EUROPEAN PATENT APPLICATION

(11) **EP 4 600 468 A1**
(43) Date of publication of application: **13.08.2025**
(21) Application number: 25155162.8
(22) Date of filing: 31.01.2025
(51) Int. Cl.: F01D 25/16, F01D 25/18

(54) **GASTURBINE LUBRICATION SYSTEM AND PROCESS**

(30) Priority: 06.02.2024 US 202418433561
(71) Applicant: RTX Corporation, Farmington, CT 06032 (US)
(72) Inventor: Nelson, Alexander Robert, Amston, 06231 (US); Walker, Brady L., Glastonbury, 06033 (US)
(74) Representative: Schmitt-Nilson Schraud Waibel Wohlfrom Patentanwälte Partnerschaft mbB

(57) **Abstract**

A lubrication system including a bearing compartment housing; a shaft supported by bearings located within the bearing compartment housing; and a persuader in operative communication with the shaft, the persuader configured to propel at least one of a lubricant, air and a mist of lubricant entrained in the air onto the bearing.

## Description

The present disclosure is directed to a lubrication system for bearings utilizing suspended in air entrained lubricant.

Some aircraft engines use fluid lubricated bearings. The lubricated bearings traditionally use lubrication systems which utilize pressurized oil and/or fuel that require parts such as supply/scavenge pumps, reservoirs, sumps, plumbing/pipes, and seals. These lubrication system components can account for up to 30% of overall propulsion system weight, volume, and cost in certain engines (e.g., small limited-life engines).

In accordance with the present disclosure, there is provided a lubrication system comprising a bearing compartment housing; a shaft supported by bearings located within the bearing compartment housing; and a persuader in operative communication with the shaft, the persuader configured to propel at least one of a lubricant, air and a mist of lubricant entrained in the air onto the bearing.

Particular embodiments further may include at least one, or a plurality of, the following optional features, alone or in combination with each other:

A further embodiment of any of the foregoing embodiments may additionally and/or alternatively include the persuader is selected from the group comprising one of a fan, an axial flow fan, a compressor, a mixed flow compressor, and the like.

A further embodiment of any of the foregoing embodiments may additionally and/or alternatively include the persuader is integral with the shaft.

A further embodiment of any of the foregoing embodiments may additionally and/or alternatively include the lubrication system further comprising a volute in operative communication with the persuader.

A further embodiment of any of the foregoing embodiments may additionally and/or alternatively include the volute is formed as part of the bearing compartment housing.

A further embodiment of any of the foregoing embodiments may additionally and/or alternatively include the bearing compartment housing is configured as a clam-shell design, wherein the bearing compartment housing can be configured removable with a volute.

A further embodiment of any of the foregoing embodiments may additionally and/or alternatively include the lubrication system further comprising guide vanes in operative communication with the persuader; the guide vanes being configured to influence the flow of at least one of the lubricant, the air and the mist of lubricant entrained in the air onto the bearing.

In accordance with the present disclosure, there is provided a lubrication system comprising a gas turbine engine having a gas turbine engine housing, the gas turbine engine housing having a forward portion opposite an aft portion; a shaft mounted within the gas turbine engine housing, the shaft having an axis; a bearing compartment housing formed within the gas turbine engine housing; at least one bearing located within the bearing compartment housing supports the shaft; and at least one persuader in operative communication with the shaft, the at least one persuader configured to propel at least one of a lubricant, air and a mist of lubricant entrained in the air onto the at least one bearing.

Particular embodiments further may include at least one, or a plurality of, the following optional features, alone or in combination with each other:

A further embodiment of any of the foregoing embodiments may additionally and/or alternatively include the at least one persuader is selected from the group comprising one of a fan, an axial flow fan, a compressor, a mixed flow compressor, and the like.

A further embodiment of any of the foregoing embodiments may additionally and/or alternatively include the lubrication system further comprising a volute in operative communication with the at least one persuader.

A further embodiment of any of the foregoing embodiments may additionally and/or alternatively include the at least one persuader is integral with the shaft.

A further embodiment of any of the foregoing embodiments may additionally and/or alternatively include the lubrication system further comprising guide vanes in operative communication with the at least one persuader; the guide vanes being configured to influence a flow of at least one of the lubricant, the air and the mist of lubricant entrained in the air onto the at least one bearing.

A further embodiment of any of the foregoing embodiments may additionally and/or alternatively include the at least one persuader comprises a first persuader and a second persuader in operative communication with the shaft, wherein the first persuader is configured to propel the lubricant in a first direction onto a first bearing; and the second persuader is configured to propel the lubricant in a second direction onto a second bearing.

In accordance with the present disclosure, there is provided a process for a lubrication system comprising providing a gas turbine engine having a gas turbine engine housing, the gas turbine engine housing having a forward portion opposite an aft portion; mounting a shaft within the gas turbine engine housing, the shaft having an axis and the shaft being supported by at least one bearing; coupling at least one persuader to the shaft; and configuring the at least one persuader to propel at least one of a lubricant, air and a mist of lubricant entrained in the air onto the at least one bearing.

Particular embodiments further may include at least one, or a plurality of, the following optional features, alone or in combination with each other:

A further embodiment of any of the foregoing embodiments may additionally and/or alternatively include the at least one persuader is selected from the group comprising one of a fan, an axial flow fan, a compressor, a mixed flow compressor, and the like.

A further embodiment of any of the foregoing embodiments may additionally and/or alternatively include the process further comprising mounting a volute in a bearing compartment housing, the volute being in operative communication with the at least one persuader.

A further embodiment of any of the foregoing embodiments may additionally and/or alternatively include the process further comprising configuring the bearing compartment housing as a clam-shell design; and configuring the bearing compartment housing removable with the volute.

A further embodiment of any of the foregoing embodiments may additionally and/or alternatively include the process further comprising configuring the persuader to maintain the lubricant to stay within a bearing compartment.

A further embodiment of any of the foregoing embodiments may additionally and/or alternatively include the process further comprising mounting guide vanes in a bearing compartment housing, the guide vanes in operative communication with the at least one persuader; and configuring the guide vanes to influence a flow of at least one of the lubricant, the air and the mist of lubricant entrained in the air onto the at least one bearing.

A further embodiment of any of the foregoing embodiments may additionally and/or alternatively include the process further comprising forming a first persuader and a second persuader in operative communication with the shaft; configuring the first persuader to propel the lubricant in a first direction onto a first bearing; and configuring the second persuader to propel the lubricant in a second direction onto a second bearing.

Other details of the lubrication system are set forth in the following detailed description and the accompanying drawings wherein like reference numerals depict like elements.
Fig. 1 is a schematic representation of an exemplary lubrication system associated with a gas turbine system in a vehicle.
Fig. 2 is a schematic representation of the exemplary lubrication system.

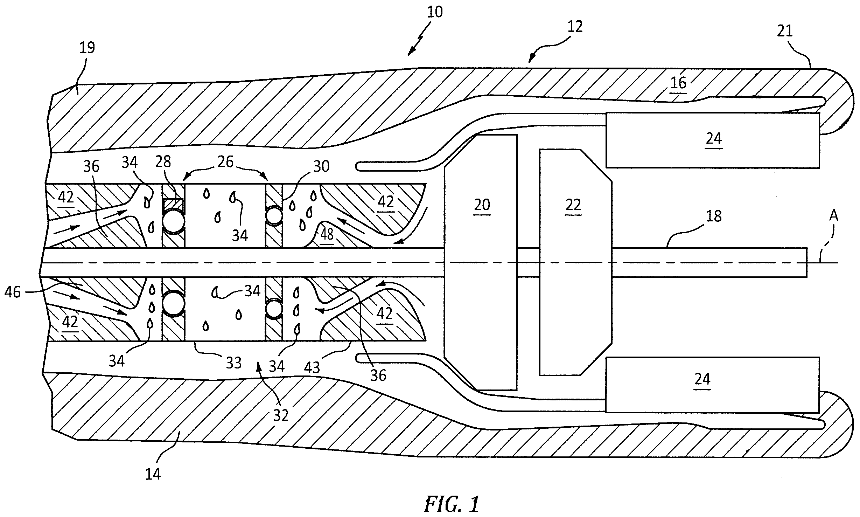

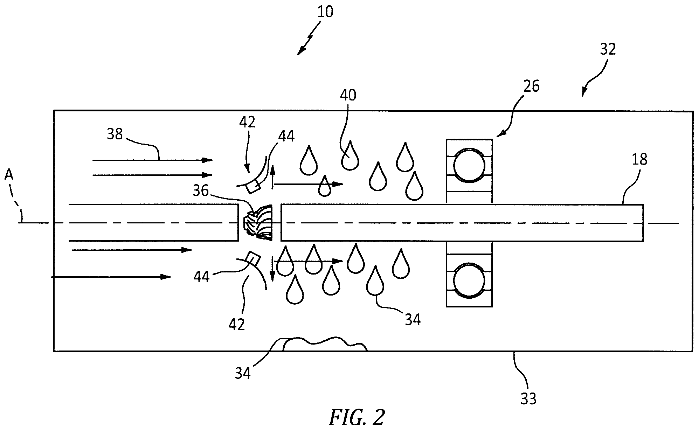

Referring now to Fig. 1 and Fig. 2, there is illustrated an exemplary lubrication system 10. The lubrication system 10 is associated with a gas turbine engine(turbo-jet) 12 installed in a vehicle 14, such as an unmanned or expendable vehicle. The gas turbine engine 12 includes a housing 16 supporting a shaft 18 aligned along an axis A. A forward portion 19 of the gas turbine engine 12 and an aft portion 21 of the gas turbine engine 12 are shown relative to the axis A. The gas turbine includes a compressor 20, a turbine 22 and combustor(s) 24. The compressor 20 and turbine 22 can be supported on the shaft 18.

The shaft 18 can be supported on bearings 26, such as first bearing 28 and second bearing 30. The first bearing 28 can be located axially forward of the second bearing 28 along the shaft 18. The bearings 26 can be located within a bearing compartment 32. The bearing compartment 32 includes a bearing compartment housing 33 that contains the bearings 26. The bearing compartment 32 can contain lubricant 34. The lubricant 34 can include liquid lubricant and lubricant mist, lubricant suspended in air as well as solid lubricant and semi-solid lubricant. The lubricant 34 can be an oil, a fuel, a grease and the like. The lubricant 34 can have a variety of viscosities. The lubricant 34 can be temperature dependent and change viscosity responsive to the temperature.

The lubrication system 10 can include a persuader 36. The persuader 36 can be in operative communication (e.g., coupled to, formed with, and the like) with the shaft 18. The persuader 36 can be configured to be rotated by the shaft 18. The persuader 36 can be integral with the shaft 18. The persuader 36 can be mounted to the shaft 18. The persuader 36 can include a fan, an axial flow fan, a compressor, a mixed flow compressor, and the like.

The persuader 36 can be configured to propel the lubricant 34 in any phase or form, such as a liquid, a gas, a mixed phase fluid, and the like. The persuader 36 can be positioned to propel air 38 containing the lubricant 34. The lubricant 34 can be provided from a variety of sources and locations, such as, in the form of an oil mist, or grease dripping from a surface or such as a drip or mist from an oil tank. The persuader 36 can propel air 38, lubricant 34 and/or a mist 40 of lubricant 34/air 38. The persuader 36 can propel the lubricant 34 into contact with the bearings 26 to provide lubrication to the bearings 26. The persuader 36 can propel the lubricant 34 through the bearing compartment 32 from sources within the bearing compartment 32. The persuader 36 can propel the lubricant 34 from a source outside the bearing compartment 32 into the bearing compartment 32 and onto into contact with the bearings 26. The persuader 36 can be configured to maintain the lubricant 34/mist 40 to stay within the bearing compartment 32.

A volute 42 can encase the persuader 36. The volute 42 can be configured to direct the air 38 in proximity of the persuader 36 to propel the air 38/mist 40 onto the bearings 26. In an exemplary embodiment, the volute 42 can be an integral mixed flow compressor volute, formed as part of the bearing compartment housing 33. The volute 42 can be cast or machined into the bearing compartment housing 33. The volute 42 can be bolted/attached to the bearing compartment housing 33. In an exemplary embodiment, the bearing compartment housing 33 can be configured as a clam-shell design. The bearing compartment housing 33 can be removed with the volute 42. The volute 42 formed as a clam-shell design can be built around the persuader 36 (mixed flow compressor). The volute 42 can be built, and/or part of the housing 33 of the engine 12. In an exemplary embodiment, the volute 42 can be built by additive manufacturing (3D print) to better serve reducing part count.

As illustrated in FIG. 2, guide vanes 44 can be incorporated with the persuader 36 to influence the flow of the air 38/mist 40 lubricant 34 through the persuader 36. The guide vanes 44 can be formed integral with the volute 42. The guide vanes 44 can be configured to alter the fluid flow of the air 38/ mist 40 lubricant 34 through the bearing compartment 32.

The exemplary embodiment shown in Fig. 1 incorporates a first persuader 46 and a second persuader 48. The first persuader 46 is configured to propel the air 38/mist 40, lubricant 34 into the first bearing 28 in an aft direction. The second persuader 48 is configured to propel the air 38/mist 40, lubricant 34 into the second bearing 30 in a forward direction. The first persuader 46 and second persuader 48 maintain a lubricant 34 in contact with the bearings 26. The lubricant 34 can pool within the bearing compartment 32, the lubricant 34 can burn up, or be ported out of the bearing compartment 32 to an exhaust (not shown).

A technical advantage of the disclosed lubrication system includes the elimination of a complex lubrication system.

Another technical advantage of the disclosed lubrication system includes weight reduction.

Another technical advantage of the disclosed lubrication system includes cost reduction.

Another technical advantage of the disclosed lubrication system includes improved efficiency of current engine systems.

Another technical advantage of the disclosed lubrication system includes fewer assembly pieces, simpler assembly.

Another technical advantage of the disclosed lubrication system includes elimination of on-board plumbing for oil delivery and return.

Another technical advantage of the disclosed lubrication system includes reduction of joining hardware for legacy lubrication systems, (less nuts and bolts for hardware attachment).

There has been provided a lubrication system. While the lubrication system has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A lubrication system comprising:
a bearing compartment housing;
a shaft supported by bearings located within the bearing compartment housing; and
a persuader in operative communication with the shaft, the persuader configured to propel at least one of a lubricant, air and a mist of lubricant entrained in the air onto the bearing.

2. The lubrication system according to claim 1, wherein the persuader is selected from the group comprising one of a fan, an axial flow fan, a compressor, a mixed flow compressor, and the like.

3. The lubrication system according to claim 1 or 2, wherein the persuader is integral with the shaft.

4. The lubrication system according to any of claims 1 to 3, further comprising:
a volute in operative communication with the persuader.

5. The lubrication system according to claim 4, wherein the volute is formed as part of the bearing compartment housing.

6. The lubrication system according to any of claims 1 to 5, wherein the bearing compartment housing is configured as a clam-shell design, wherein the bearing compartment housing can be configured removable with a volute.

7. The lubrication system according to any of claims 1 to 6, further comprising:
guide vanes in operative communication with the persuader; the guide vanes being configured to influence the flow of at least one of the lubricant, the air and the mist of lubricant entrained in the air onto the bearing.

8. The lubrication system according to any of claims 1 to 7, further comprising:
a gas turbine engine having a gas turbine engine housing, the gas turbine engine housing having a forward portion opposite an aft portion;
wherein the shaft is mounted within the gas turbine engine housing, the shaft having an axis;
wherein the bearing compartment housing is formed within the gas turbine engine housing; and
wherein at least one bearing located within the bearing compartment housing supports the shaft.

9. The lubrication system according to any of claims 1 to 8, wherein the at least one persuader is integral with the shaft.

10. The lubrication system according to any of claims 1 to 9, wherein the at least one persuader comprises a first persuader and a second persuader in operative communication with the shaft; wherein the first persuader is configured to propel the lubricant in a first direction onto a first bearing; and the second persuader is configured to propel the lubricant in a second direction onto a second bearing.

11. A process for a lubrication system comprising:
providing a gas turbine engine having a gas turbine engine housing, the gas turbine engine housing having a forward portion opposite an aft portion;
mounting a shaft within the gas turbine engine housing, the shaft having an axis and the shaft being supported by at least one bearing;
coupling at least one persuader to the shaft; and
configuring the at least one persuader to propel at least one of a lubricant, air and a mist of lubricant entrained in the air onto the at least one bearing.

12. The process of claim 11, wherein the at least one persuader is selected from the group comprising one of a fan, an axial flow fan, a compressor, a mixed flow compressor, and the like, and/or
further comprising:
mounting a volute in a bearing compartment housing, the volute being in operative communication with the at least one persuader.

13. The process of claim 12, further comprising:
configuring the bearing compartment housing as a clam-shell design; and
configuring the bearing compartment housing removable with the volute.

14. The process of any of claims 11 to 13, further comprising:
configuring the persuader to maintain the lubricant to stay within a bearing compartment; and/or
further comprising:
mounting guide vanes in a bearing compartment housing, the guide vanes in operative communication with the at least one persuader; and
configuring the guide vanes to influence a flow of at least one of the lubricant, the air and the mist of lubricant entrained in the air onto the at least one bearing.

15. The process of any of claims 11 to 14, further comprising:
forming a first persuader and a second persuader in operative communication with the shaft;
configuring the first persuader to propel the lubricant in a first direction onto a first bearing; and
configuring the second persuader to propel the lubricant in a second direction onto a second bearing.
